# EUROPÄISCHE PATENTSCHRIFT

(11) **EP 2 422 427 B1**
(45) Veröffentlichungstag und Bekanntmachung des Hinweises auf die Patenterteilung: **26.08.2015**
(21) Anmeldenummer: 10714272.1
(22) Anmeldetag: 16.04.2010
(51) Int. Cl.: H02K 1/28

(54) **ROTIERENDE ELEKTRISCHE MASCHINE, INSBESONDERE DOPPELT GESPEISTE ASYNCHRONMASCHINE IM LEISTUNGSBEREICH ZWISCHEN 20 MVA UND ÜBER 500 MVA**
ROTATING ELECTRIC MACHINE, IN PARTICULAR DOUBLE-FEED ASYNCHRONOUS MACHINE IN THE POWER RANGE BETWEEN 20MVA AND OVER 500MVA
MACHINE ÉLECTRIQUE TOURNANTE, NOTAMMENT MACHINE ASYNCHRONE À DOUBLE ALIMENTATION DANS UNE RÉGION DE PUISSANCE COMPRISE ENTRE 20MVA ET AU DESSUS DE 500MVA

(30) Priorität: 24.04.2009 DE 102009018549; 20.08.2009 DE 102009037987
(43) Veröffentlichungstag der Anmeldung: 29.02.2012
(73) Patentinhaber: ALSTOM Renewable Technologies, 38100 Grenoble (FR)
(72) Erfinder: SCHWERY, Alexander, CH-5024 Küttigen (CH); CIFYILDIZ, Serdar, CH-8400 Winterthur (CH); WALSER, Hanspeter, CH-4712 Laupersdorf (CH); MEYER, Bruno, CH-5524 Niederwil (CH); OKAI, Ricardo, CH-5442 Fislisbach (CH)
(74) Vertreter: Alstom Technology Ltd
(86) Internationale Anmeldenummer: PCT/EP2010/055055
(87) Internationale Veröffentlichungsnummer: WO 2010/121970

(56) Entgegenhaltungen:
- EP-A2- 0 414 129
- DE-A1- 3 907 860
- JP-A- 57 138 830
- US-A- 725 773

## Beschreibung

### TECHNISCHES GEBIET

Die vorliegende Erfindung bezieht sich auf das Gebiet der Erzeugung elektrische Energie Sie betrifft eine rotierende elektrische Maschine, insbesondere doppelt gespeiste Asynchronmaschine in einem Leistungsbereich zwischen 20 MVA und 500 MVA oder darüber, gemäss dem Oberbegriff des Anspruchs 1.

### STAND DER TECHNIK

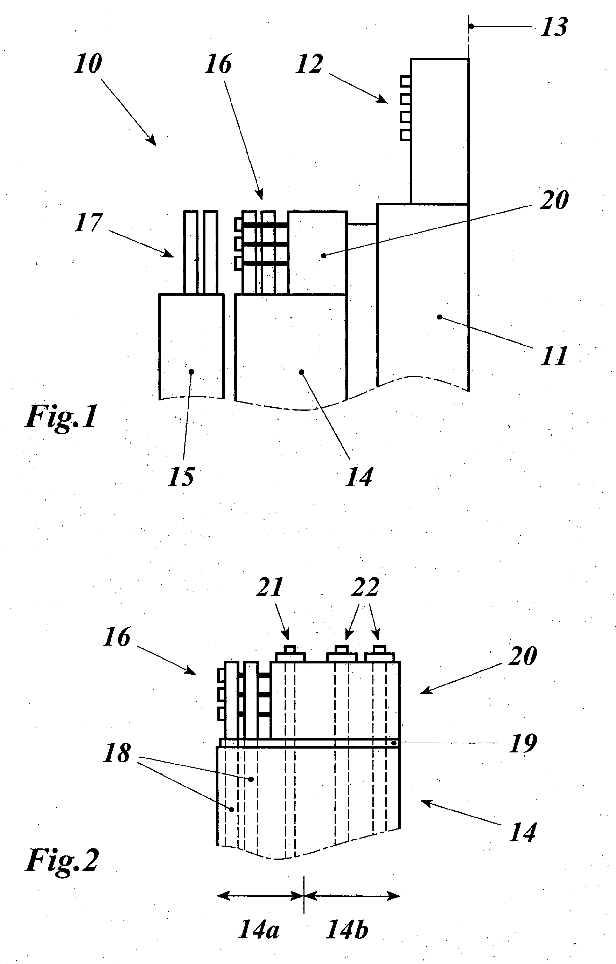

Doppelt gespeiste Asynchronmaschinen im Leistungsbereich von 20 MVA bis 500 MVA oder darüber können zur drehzahlvariablen Energieproduktion eingesetzt werden. Diese Maschinen zeichnen sich durch eine verteilte Dreiphasenwicklung auf dem Rotor aus. Die Rotorwicklung besteht aus einzelnen Stäben, welche im Rotorblechpaket in Nuten eingebettet sind. Im Wickelkopf werden die einzelnen Stäbe zu einer Wicklung verschaltet. Die Einspeisung der Ströme erfolgt über mindestens drei Schleifringe, welche am Ende der Maschine an der Welle befestigt sind. Ein Ausschnitt aus einer solchen Maschine ist in Fig. 1 in stark vereinfachter Form wiedergegeben. Die in Fig. 1 dargestellte Asynchronmaschine 10 hat eine Maschinenachse 13. Um diese Achse 13 drehbar ist ein Zentralkörper 11 mit einer Welle, auf der die Schleifringe 12 angeordnet sind. Um den Zentralkörper 11 herum ist der Rotorblechkörper 14 angeordnet, an den unterhalb eines Wickel kopfes 16 der Rotorwicklung ein Hilfsrim 20 anschliesst. der Rotorblechkörper 14 ist von einem Statorblechkörper 15 konzentrisch umgeben, in dem eine Statorwicklung untergebracht ist, die am Ende des Körpers mit einem Statorwickelkopf 17 nach aussen vorsteht. Der Rotorblechkörper 14 ist in Fig..2 im Ausschnitt vergrössert wiedergegeben.

Da die Rotoren von doppelt gespeisten Asynchronmaschinen eine Rotorwicklung 18 tragen, muss diese gegen die auftretenden Zentrifugalkräfte gesichert werden. Das Rotorblechpaket dient zum einen der Aufnahme dieser Kräfte und definiert zugleich den Weg des magnetischen Flusses. Das Hilfsrim 20 dient der Aufnahme der Zentrifugalkräfte die auf den Rotorwickelkopf 16 einwirken. Das Hilfsrim 20, wie auch der Rotorblechkörper 14, bestehen aus geschichteten Blechen, welche in axialer Richtung zu einem Verbund gepresst werden. Es ist bekannt, hierbei eine Pressplatte 19 einzusetzen, die den durch Bolzen 21, 22 aufgebrachten Pressdruck auf die Bleche des Rotorblechpakets verteilt (siehe z.B. die DE-A1-195 13 457 oder die DE-A1-10 2007 000 668).

Die EP 0414129 A2 beschreibt eine elektrische Rotationsmaschine mit einem laminierten Kern. Der laminierte Kern ist fest montiert am Aussenumfang der Rotoreinfassung, wobei jede der Lagen des laminierten Kerns aus einer Vielzahl von fächerförmigen dünnen Kernplatten besteht, die ringförmig angeordnet sind.

Die US725773 A beschreibt eine dynamoelektrische Maschine mit einem Magnetkern aus Laminierungen aus Metall, welche in die Rotoreinfassungen eingepasst sind, sowie mit schweren Klemmplatten, welche die Laminierungen von ausserhalb mit Bolzen sichern.

Die JP57138830 A beschreibt eine laminierte Einfassung an der Rotorwelle einer elektrischen Maschine. Blechplatten der laminierten Einfassung und Endplatten mit grösserer Dicke werden an den Enden der Blechplatten mit Bolzen befestigt.

### DARSTELLUNG DER ERFINDUNG

Es ist daher Aufgabe der Erfindung, eine elektrische Maschine der eingangs genannten Art so zu verbessern, dass die unterschiedlichen Anforderungen an die Verspannung des Rotorblechkörpers in den unterschiedlichen Bereichen erheblich besser erfüllt werden können.

Die Aufgabe wird durch die Gesamtheit der Merkmale des Anspruchs 1 gelöst. Wichtig für die erfindungsgemässe Lösung ist, dass die Pressplatte entsprechend der radialen Unterteilung des Rotorblechkörpers radial unterteilt ist in eine separate innere Pressplatte und eine separate äussere Pressplatte. Durch die Auftrennung der Pressplatte entsprechend den unterschiedlichen Bereichen des Rotorblechkörpers können die auf den Rotorblechkörper wirkenden Kräfte getrennt optimiert werden, wobei mit der inneren Pressplatte auf den mechanischen Bereich ein größerer axialer Druck auf den Rotorblechkörper ausgeübt wird als mit der äusseren Pressplatte auf den elektrischen Bereich.

Eine erste Ausgestaltung der Erfindung ist dadurch gekennzeichnet, dass die innere und äussere Pressplatte miteinander lösbar verbunden sind. Hierdurch können die an der äusseren Pressplatte angreifenden Zentrifugalkräfte wirksam aufgefangen werden.

Eine andere Ausgestaltung zeichnet sich dadurch aus, dass die innere und äussere Pressplatte derart aneinander grenzen und miteinander verbunden sind, dass die äussere Pressplatte gegenüber der inneren Pressplatte gekippt werden kann.

Insbesondere ist es dabei von Vorteil, wenn die äussere Pressplatte entlang dem Umfang in einzelne gleichartige Umfangsteile unterteilt ist, wenn die Umfangsteile der äusseren Pressplatte jeweils mit einer geraden Kippkante an die innere Pressplatte angrenzen, und wenn die Umfangsteile der äusseren Pressplatte jeweils in die innere Pressplatte eingehängt sind.

Vorzugsweise können die Umfangsteile der äusseren Pressplatte jeweils mittels Hammerklauen in die innere Pressplatte eingehängt sein.

Eine weitere Ausgestaltung der Erfindung ist dadurch gekennzeichnet, dass die innere Pressplatte erste Löcher aufweist, durch welche erste Bolzen zum Verpressen des Rotorblechkörpers im mechanischen Bereich hindurchreichen, und dass die äussere Pressplatte zweite Löcher aufweist, durch welche zweite Bolzen zum Verpressen des Rotorblechkörpers im elektrischen Bereich hindurchreichen.

Dabei ist es von Vorteil, wenn die ersten Bolzen als Scherbolzen und die zweiten Bolzen als Zugbolzen ausgebildet sind.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer stark vereinfachten Darstellung einen Ausschnitt aus einer Asynchronmaschine, wie sie zur Anwendung der Erfindung geeignet ist;
- Fig. 2: in einem vergrösserten Ausschnitt den Aufbau des Rotorblechkörpers der Maschine aus Fig. 1 einschliesslich einer zum Verspannen des Rotorblechkörpers eingesetzten Pressplatte; und
- Fig. 3: in der Draufsicht in axialer Richtung einen Sektor einer Pressplatte zum Verspannen des Rotorblechkörpers gemäss einem Ausführungsbeispiel der Erfindung.

### WEGE ZUR AUSFÜHRUNG DER ERFINDUNG

Wie bereits eingangs erwähnt, soll einerseits in den Zähnen genügend axialer Druck zwischen den Schichten der Bleche bestehen, um die Homogenität des Körpers zu garantieren. Um Vibrationen zu vermeiden, dürfen sich die Schichten nicht lockern, da Relativbewegungen zwischen den Zähnen und der Rotorwicklung die Isolation beschädigen könnten. Andererseits darf der Druck nicht zu hoch sein, um Schaden an den Isolationsschichten zwischen den einzelnen Blechen zu vermeiden, da solche Schäden zu erhöhten Verlusten führen würden. Im mechanischen Bereich des Rims soll der axiale Druck höher sein als im elektrischen Teil, um eine gewisse Reibkraft zwischen den Blechen zu erhalten.

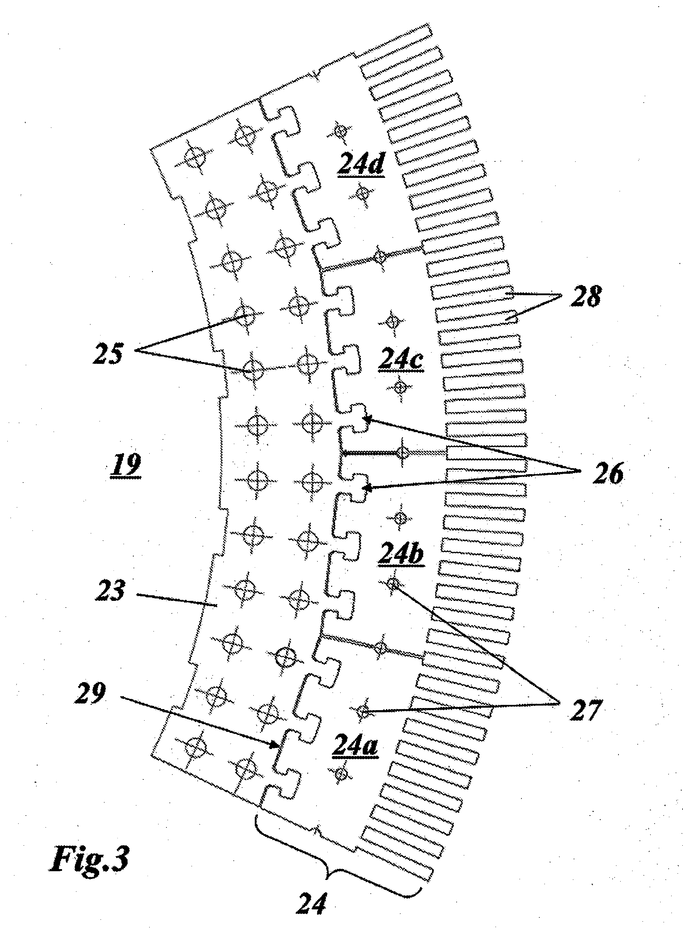

Diese sich widersprechenden Anforderungen an den elektrischen und mechanischen Teil des Statorblechkörpers 14 können durch eine radial getrennte Pressplatte 19 erreicht werden. Fig. 3 zeigt eine schematische Darstellung eines Ausführungsbeispiels der Pressplatte 19 in der Draufsicht in axialer Richtung. Die Pressplatte 19 ist sowohl in radialer Richtung als auch teilweise in Umfangsrichtung unterteilt in eine separate innere Pressplatte 23 und eine separate äussere Pressplatte 24.

Die innere Pressplatte 23 kann sowohl massiv ausgebildet sein als auch gemäss einer ergänzenden Ausführungsart aus einer Mehrzahl dünner Bleche zusammengesetzt sein. Dabei hat es sich als besonders vorteilhaft erwiesen, die dünnen Bleche einzeln oder gruppenweise in Umfangsrichtung zueinander versetzt anzuordnen. Eine derartige Verschichtung der inneren Pressplatte 23 bildet einen sich selbst tragenden Ring aus, womit die Kräfte auf die Scherbolzen massgeblich reduziert werden können.

Die äussere Pressplatte 24 ist ihrerseits in Umfangsrichtung unterteilt in einzelne Umfangsteile 24a-d, welche vorzugsweise aus einem nichtmagnetischen Stahl bestehen. Durch die der Aufteilung des Rotorblechkörpers 14 in einen mechanischen Bereich 14b und einen elektrischen Bereich 14a folgende Unterteilung der Pressplatte 19 in einen inneren und mehrere äussere Teile 23 bzw. 24a-d kann für die unterschiedlichen Bereiche des Rotorblechkörpers die Art und Weise der axialen Verspannung getrennt optimiert werden.

Verschiedene Ansprüche werden an den Rotorblechkörper 14 gestellt. In Fig. 2 ist die prinzipielle Unterteilung in einen elektrischen Bereich 14a und einen mechanischen Bereich 14b dargestellt. Einerseits soll in den Zähnen genügend axialer Druck zwischen den Schichten der Bleche bestehen um die Homogenität des Körpers zu garantieren. Um Vibrationen zu vermeiden, dürfen sich die Schichten nicht lockern, da Relativbewegungen zwischen den Zähnen und der Rotorwicklung 18 die Isolation beschädigen könnten. Andererseits darf der Druck nicht zu hoch sein, um Schaden an den Isolationsschichten zwischen den einzelnen Blechen zu vermeiden, da solche Schäden zu erhöhten Verlusten führen würden. Im mechanischen Bereich 14b des Rims soll der axiale Druck höher sein, als im elektrischen Bereich 14a, um eine gewisse Reibkraft zwischen den Blechen zu erhalten.

Um ein gezieltes Kippen der äusseren Pressplatte 24 erreichen zu können, muss die Trennung zwischen der äusseren und inneren Pressplatte 23 bzw. 24 eine gerade Kippkante 29 aufweisen. Durch die radiale Trennung der Pressplatte 19 ist es möglich, unterschiedliche Drücke im elektrischen und mechanischen Bereich 14a bzw. 14b des Rotorblechkörpers 14 zu erreichen. Um die äussere Pressplatte 24 gegen Zentrifugalkräfte zu sichern, ist sie gemäss Fig. 3 über Hammerklauen 26 in der inneren Pressplatte 23 eingehängt.

Um den gewünschten axialen Druck im Rotorblechkörper 14 aufzubauen, werden Scher- und Zugbolzen 22 bzw. 21 eingesetzt. Die Zugbolzen 21 verlaufen durch die Löcher 27 in der Pressplatte 19 hindurch über die gesamte axiale Länge des Rotorblechkörpers 14. Da sich die Zugbolzen 21 im magnetisch aktiven Teil (hohe magnetische Induktion) des Blechkörpers befinden, müssen sie elektrisch isoliert sein. Um eine mechanische Beanspruchung der Isolation zu vermeiden, können diese Bolzen allerdings nicht auf Scherung beansprucht werden. Über die Spannung im Bolzen kann der Druck auf die äussere Pressplatte 24 und damit der Druck in den Zähnen "eingestellt" werden.

Anstelle von durchgängigen Zugbolzen 21 können aber auch Druckbolzen im Hilfsrim 20 verwendet werden. Wird ein Druckbolzen im Hilfsrim 20 verwendet, geschieht die Druckübertragung auf den Zahnbereich des Rotorblechkörpers 14. Zwischen Druckbolzen und Pressplatte 19 befinden sich eine Druckplatte und eine Mutter. Durch die Einschraubtiefe des Bolzens in der Mutter kann der Druck auf die Pressplatte 19 und somit auf die Zähne "eingestellt" werden.

Die Scherbolzen 22 übernehmen zwei Aufgaben. Zum einen dienen sie dem Aufbringen des axialen Drucks im mechanischen Bereich 14b des Rotorblechkörpers 14. Zum anderen müssen sie die zwischen den Blechen auftretenden Scherkräfte aufnehmen. Aus diesem Grund können die Bolzen nicht isoliert sein und befinden sich konsequenter Weise am inneren Rand, im magnetisch schwach genutzten Teil des Rotorblechkörpers 14.

## Patentansprüche

1. Rotierende elektrische Maschine, insbesondere doppelt gespeiste Asynchronmaschine (10) im Leistungsbereich zwischen 20 MVA und über 500 MVA, welche einen um eine Achse (13) drehenden, von einem Stator (15, 17) konzentrisch umgebenen Rotor (11, 14) umfasst, wobei der Rotor (11, 14) einen aus geschichteten und in axialer Richtung unter Einsatz einer Pressplatte (19) zu einem Verbund verpressten Blechen aufgebauten Rotorblechkörper (14) aufweist, der in radialer Richtung in einen inneren mechanischen Bereich (14b) und einen äusseren elektrischen Bereich (14a) unterteilt ist, und in dem im elektrischen Bereich (14a) eine Rotorwicklung (18) untergebracht ist, wobei die Pressplatte (19) radial unterteilt ist in eine separate innere Pressplatte (23) und eine separate äussere Pressplatte (24), wobei die innere Pressplatte (23) und die äussere Pressplatte (24) miteinander verbunden sind, **dadurch gekennzeichnet, dass** die Pressplatte (19) entsprechend der radialen Unterteilung des Rotorblechkörpers (14) radial unterteilt ist und mit der inneren Pressplatte (23) auf den mechanischen Bereich ein größerer axialer Druck auf den Rotorblechkörper ausgeübt wird als mit der äusseren Pressplatte (24) auf den elektrischen Bereich.

2. Rotierende elektrische Maschine nach Anspruch 1, **dadurch gekennzeichnet, dass** die innere und äussere Pressplatte (23 bzw. 24) miteinander lösbar verbunden sind.

3. Rotierende elektrische Maschine nach Anspruch 2, **dadurch gekennzeichnet, dass** die innere und äussere Pressplatte (23 bzw. 24) derart aneinander grenzen und miteinander verbunden sind, dass die äussere Pressplatte (24) gegenüber der inneren Pressplatte (23) gekippt werden kann.

4. Rotierende elektrische Maschine nach Anspruch 3, **dadurch gekennzeichnet, dass** die äussere Pressplatte (24) entlang dem Umfang in einzelne gleichartige Umfangsteile (24a-d) unterteilt ist, dass die Umfangsteile (24a-d) der äusseren Pressplatte (24) jeweils mit einer geraden Kippkante (29) an die innere Pressplatte (23) angrenzen, und dass die Umfangsteile (24a-d) der äusseren Pressplatte (24) jeweils in die innere Pressplatte (23) eingehängt sind.

5. Rotierende elektrische Maschine nach Anspruch 4, **dadurch gekennzeichnet, dass** die Umfangsteile (24a-d) der äusseren Pressplatte (24) jeweils mittels Hammerklauen (26) in die innere Pressplatte (23) eingehängt sind.

6. Rotierende elektrische Maschine nach einem der Ansprüche 1 bis 5, **dadurch gekennzeichnet, dass** die innere Pressplatte (23) erste Löcher (25) aufweist, durch welche erste Bolzen (22) zum Verpressen des Rotorblechkörpers (14) im mechanischen Bereich (14b) hindurchreichen, und dass die äusseren Pressplatte (24) zweite Löcher (27) aufweist, durch welche zweite Bolzen (21) zum Verpressen des Rotorblechkörpers (14) im elektrischen Bereich (14a) hindürchreichen.

7. Rotierende elektrische Maschine nach Anspruch 6, **dadurch gekennzeichnet, dass** die ersten Bolzen (22) als Scherbolzen und die zweiten Bolzen (21) als Zugbolzen ausgebildet sind.

8. Rotierende elektrische Maschine nach einem der Ansprüche 1 bis 7, **dadurch gekennzeichnet, dass** die innere Pressplatte (23) aus einer Mehrzahl von Blechen zusammengesetzt ist.

9. Rotierende elektrische Maschine nach Anspruch 8, **dadurch gekennzeichnet, dass** die Bleche einzeln oder gruppenweise in Umfangsrichtung zueinander versetzt angeordnet sind.

## Claims

1. Rotating electric machine, in particular double-fed asynchronous machine (10) in the performance range between 20 MVA and more than 500 MVA, which comprises a rotor (11, 14), which rotates about an axis (13) and is surrounded concentrically by a stator (15, 17), the rotor (11, 14) having a rotor laminate stack (14), which is constructed from laminations which are layered and are pressed in the axial direction using a press plate (19) to form a composite, said rotor laminate stack being divided in the radial direction into an inner mechanical region (14b) and an outer electrical region (14a), and a rotor winding (18) being accommodated in the electrical region (14a) in said rotor laminate stack, the press plate (19) being divided radially into a separate inner press plate (23) and a separate outer press plate (24), the inner press plate (23) and the outer press plate (24) being connected to one another, **characterized in that** the press plate (19) is divided radially corresponding to the radial division of the rotor laminate stack (14) and a greater axial pressure is exerted on the rotor laminate stack onto the mechanical region by the inner press plate (23) than onto the electrical region by the outer press plate (24).

2. Rotating electric machine according to Claim 1, **characterized in that** the inner and outer press plates (23 and 24, respectively) are connected detachably to one another.

3. Rotating electric machine according to Claim 2, **characterized in that** the inner and outer press plates (23 and 24, respectively) adjoin one another and are connected to one another in such a way that the outer press plate (24) can be tipped with respect to the inner press plate (23).

4. Rotating electric machine according to Claim 3, **characterized in that** the outer press plate (24) is divided along the circumference into individual identical circumferential parts (24a-d), **in that** the circumferential parts (24a-d) of the outer press plate (24) adjoin, in each case with a straight tipping edge (29), the inner press plate (23), and **in that** the circumferential parts (24a-d) of the outer press plate (24) are each suspended in the inner press plate (23).

5. Rotating electric machine according to Claim 4, **characterized in that** the circumferential parts (24a-d) of the outer press plate (24) are each suspended in the inner press plate (23) by means of hammer claws (26).

6. Rotating electric machine according to one of Claims 1 to 5, **characterized in that** the inner press plate (23) has first holes (25), through which first bolts (22) pass for pressing the rotor laminate stack (14) in the mechanical region (14b), and **in that** the outer press plate (24) has second holes (27), through which second bolts (21) pass for pressing the rotor laminate stack (14) in the electrical region (14a).

7. Rotating electric machine according to Claim 6, **characterized in that** the first bolts (22) are in the form of shearing bolts and the second bolts (21) are in the form of tie bolts.

8. Rotating electric machine according to one of Claims 1 to 7, **characterized in that** the inner press plate (23) comprises a plurality of laminations.

9. Rotating electric machine according to Claim 8, **characterized in that** the laminations are arranged individually or in groups in a manner offset with respect to one another in the circumferential direction.

## Revendications

1. Machine électrique tournante, en particulier machine asynchrone (10) à double alimentation dans la plage de puissance entre 20 MVA et plus de 500 MVA, laquelle comporte un rotor (11, 14) tournant autour d'un axe (13) et entouré de manière concentrique par un stator (15, 17), le rotor (11, 14) comprenant un corps en tôle de rotor (14) construit à partir de tôles stratifiées et comprimées dans la direction axiale en utilisant une plaque de pressage (19) pour former un ensemble, lequel corps en tôle de rotor est divisé dans la direction radiale en une région mécanique intérieure (14b) et une région électrique extérieure (14a), et dans lequel un enroulement de rotor (18) est logé dans la région électrique (14a), la plaque de pressage (19) étant divisée radialement en une plaque de pressage intérieure séparée (23) et une plaque de pressage extérieure séparée (24), la plaque de pressage intérieure (23) et la plaque de pressage extérieure (24) étant reliées l'une à l'autre, **caractérisée en ce que** la plaque de pressage (19) est divisée radialement de manière correspondante à la division radiale du corps en tôle de rotor (14) et une plus grande pression axiale est exercée sur la région mécanique sur le corps en tôle de rotor à l'aide de la plaque de pressage intérieure (23) que sur la région électrique à l'aide de la plaque de pressage extérieure (24).

2. Machine électrique tournante selon la revendication 1, **caractérisée en ce que** les plaques de pressage intérieure et extérieure (23 ou 24) sont reliées l'une à l'autre de manière amovible.

3. Machine électrique tournante selon la revendication 2, **caractérisée en ce que** les plaques de pressage intérieure et extérieure (23 ou 24) sont adjacentes et reliées l'une à l'autre de telle sorte que la plaque de pressage extérieure (24) puisse être basculée par rapport à la plaque de pressage intérieure (23).

4. Machine électrique tournante selon la revendication 3, **caractérisée en ce que** la plaque de pressage extérieure (24) est divisée le long de la périphérie en parties périphériques individuelles similaires (24a-d), **en ce que** les parties périphériques (24a-d) de la plaque de pressage extérieure (24) sont respectivement adjacentes à la plaque de pressage intérieure (23) par une arête de basculement droite (29), et **en ce que** les parties périphériques (24a-d) de la plaque de pressage extérieure (24) sont accrochées respectivement dans la plaque de pressage intérieure (23).

5. Machine électrique tournante selon la revendication 4, **caractérisée en ce que** les parties périphériques (24a-d) de la plaque de pressage extérieure (24) sont accrochées respectivement au moyen de griffes en forme de marteaux (26) dans la plaque de pressage intérieure (23).

6. Machine électrique tournante selon l'une quelconque des revendications 1 à 5, **caractérisée en ce que** la plaque de pressage intérieure (23) comprend des premiers trous (25) traversés par des premiers boulons (22) pour la compression du corps en tôle de rotor (14) dans la région mécanique (14b), et **en ce que** la plaque de pressage extérieure (24) comprend des deuxièmes trous (27) traversés par des deuxièmes boulons (21) pour la compression du corps en tôle de rotor (14) dans la région électrique (14a).

7. Machine électrique tournante selon la revendication 6, **caractérisée en ce que** les premiers boulons (22) sont réalisés sous forme de boulons de cisaillement et les deuxièmes boulons (21) sont réalisés sous forme de boulons de traction.

8. Machine électrique tournante selon l'une quelconque des revendications 1 à 7, **caractérisée en ce que** la plaque de pressage intérieure (23) est composée d'une pluralité de tôles.

9. Machine électrique tournante selon la revendication 8, **caractérisée en ce que** les tôles sont disposées individuellement ou par groupes d'une manière décalée les unes par rapport aux autres dans la direction périphérique.
